(19) Europäisches Patentamt
European Patent Office
Office européen des brevets

(11) Veröffentlichungsnummer: **0 231 865 B1**

(12) **EUROPÄISCHE PATENTSCHRIFT**

(45) Veröffentlichungstag der Patentschrift:
28.08.91 Patentblatt 91/35

(51) Int. Cl.$^5$: **G01N 29/00, G01N 27/82**

(21) Anmeldenummer: 87101132.6

(22) Anmeldetag: 28.01.87

(54) **Anordnung für die zerstörungsfreie Prüfung von zylinderförmigen Werkstücken.**

(30) Priorität: 01.02.86 DE 3603153

(43) Veröffentlichungstag der Anmeldung:
12.08.87 Patentblatt 87/33

(45) Bekanntmachung des Hinweises auf die
Patenterteilung:
28.08.91 Patentblatt 91/35

(84) Benannte Vertragsstaaten:
DE FR GB IT SE

(56) Entgegenhaltungen:
EP-A- 0 096 774
DE-A- 2 645 274
DE-A- 3 311 560
DE-B- 2 847 716
FR-A- 2 373 058
US-A- 4 596 953

(73) Patentinhaber: NUKEM GmbH
Industriestrasse 13
W-8755 Alzenau (DE)

(72) Erfinder: Hüschelrath, Gerhard, Dr.
Beethovenstrasse 6
W-8752 Laufach-Frohnhofen (DE)
Erfinder: Kowol, Ewald
Jahnstrasse 24
W-6393 Wehrheim (DE)
Erfinder: Dickmann, Peter
Schützenrain 4
W-6360 Friedberg (DE)

(74) Vertreter: Stoffregen, Hans-Herbert, Dr.
Dipl.-Phys. et al
Patentanwalt, Salzstrasse 11 a, Postfach 21 44
W-6450 Hanau (Main) 1 (DE)

## Beschreibung

Die Erfindung bezieht sich auf eine Anordnung für die zerstörungsfreie Prüfung von Werkstücken gemäß dem Oberbegriff des Anspruchs 1.

Mittels der zerstörungsfreien Werkstoffprüfung, zu der die Ultraschall-, Streufluß- und Wirbelstrommessung gehört, können Werkstücke auf Fehler geprüft oder hinsichtlich ihrer Dimension bestimmt werden. Dabei ist es erforderlich, daß die Meßsonden wie z. B. Meßspulen möglichst nahe an der Oberfläche angeordnet werden und daß der gewählte Abstand während der Messungen beibehalten wird. Durch das nahe Anordnen der Meßsonden an der Werkstückoberfläche ist bei einer entsprechenden Elektronik eine hohe Fehlererfassung möglich. Sofern der Abstand zwischen der Meßsonde und der Oberfläche konstant gehalten werden kann, sind Störeinflüsse minimiert, die ansonsten bei Veränderung des Abstandes, der durch Unebenheiten der Oberfläche des zu überprüfenden Werkstückes oder durch Dimensionsschwankungen auftreten kann, festzustellen sind. Für umfassende Spulen ist der Abstand zur Oberfläche dann konstant, wenn der Prüfling zur Mittelachse zentriert ist.

Es ist bereits bekannt, den Abstand eines elektrodynamischen Schallwandlers zu der Oberfläche eines flächigen Werkstückes dadurch konstant zu halten, daß ein Abstützen über Rollen erfolgt. Dabei ist es gleichzeitig erforderlich, daß die von Elektromagneten erzeugte magnetische Anziehungskraft so groß ist, daß das flächige Werkstück zu dem Magneten hin gezogen wird (DE-C 29 49 256). Eine solche Anordnung ist für die Überprüfung zylindrischer Werkstücke, die konzentrisch von einer z. B. mehrere Meßspulen umfassenden Meßeinrichtung umgeben werden sollte, nicht möglich, da eine allseitige in Richtung des Werkstückes wirkende Anpreßkraft nicht gegeben ist.

Der DE-A 26 45 274 ist eine Ultraschalluntersuchungsvorrichtung für Erdbohrungsausrüstungen zu entnehmen, bei der auf die mittels Ultraschall zu untersuchenden Rohre Stabilisatoren wirken, die eine nach innen gerichtete Kraft ausüben. Hierdurch soll vermieden werden, daß unabhängig voneinander um die Umfangsfläche der Rohre angeordnete Sonden durch ein Hin- und Hergehen der Rohre beschädigt werden.

Die DE-B 28 47 716 bezieht sich auf einen Rotierkopf zum Prüfen von langgestrecktem ferromagnetischem Prüfgut. Jede in dem Rotierkopf vorhandene Sonde wird unabhängig von den anderen Sonden mittels eines Sondenhebels auf die Prüflingsoberfläche aufgelegt. Unebenheiten der Prüflingsoberfläche können von einem die Sonde aufnehmenden aus federndem Werkstoff bestehenden Sondenhebel ausgeglichen werden.

Um einen langgestreckten Prüfling durch ein Prüfgerät zu transportieren, sind nach der DE-A 33 11 560 vor und hinter dem Prüfgerät auslenkbar gelagerte Rollen als Treibrollen vorgesehen. Da das Prüfgerät in bezug auf den Prüfling stationär angeordnet ist, kann sich der Abstand zwischen der Prüflingoberfläche und den Gerät ändern.

Ein selbstzentrierendes Antreiben von langgestrecktem Halbzeug ist der EP-A- 0 096 774 zu entnehmen.

Aufgabe der vorliegenden Erfindung ist es, eine Anordnung der zuvor beschriebenen Art so auszubilden, daß der Abstand zwischen der Meßeinrichtung und der Oberfläche des zu überprüfenden Werkstückes gleich bleibt, wobei automatisch eine Selbstzentrierung der Meßsonden zu der Längsachse des zylinderförmigen Werkstückes erfolgen soll.

Die Aufgabe wird erfindungsgemäß durch den Gegenstand des Anspruchs 1 gelöst. Unter Meßeinrichtung werden hierbei ein oder mehrere das Werkstück konzentrisch umgebende Meßsonden wie z. B. Meßspulen verstanden, wie sie z. B. bei der Wirbelstromprüfung Verwendung finden.

Ausgestaltungen ergeben sich aus den abhängigen Ansprüchen.

Um eine sichere Relativbewegung zwischen den ortsfest angeordneten Aufnahmescheiben und den hierzu verschiebbaren Flanschscheiben zu ermöglichen, ist zwischen diesen ein Gleitring vorgesehen, der aus einem Material bestehen kann, wie es unter dem Warenzeichen Teflon angeboten wird.

In einer weiteren hervorzuhebenden Ausgestaltung der Erfindung geht jedes Gleitelement in Form einer Gleitrolle von einem um eine Achse verschwenkbaren Winkelarm aus, der mit einem elastischen Element wie Feder derart wechselwirkt, daß das Gleitelement eine in Richtung der Werkstückachse gerichtete Kraft erfährt. Dabei sind die Kräfte bezüglich der einzelnen auf einer Seite der Meßeinrichtung angeordneten Gleitelemente gleichwirkend, um so Ungenauigkeiten bei der Selbstzentrierung auszuschließen. Vorzugsweise wird das dem Gleitelement abgewandte Ende des Winkelarmes von einem ringförmigen Verschiebeelement gehalten, das über das elastische Element verdrehbar zu einem die Schwenkachse aufweisenden fest mit dem Flanschscheibenelement verbundenen scheibenförmigen weiteren Element angeordnet ist. Dabei kann der Festpunkt zwischen dem Verschiebeelement und dem Ende des Schwenkarms für die einzelnen von dem scheibenförmigen Element ausgehenden Gleitelemente synchron verstellt werden, um so den Abstand der Gleitfläche der Gleitelemente zu dem Werkstück einstellen zu können.

Weitere Einzelheiten, Vorteile und Merkmale der Erfindung ergeben sich nicht nur aus den Ansprüchen, sonder auch aus der nachfolgenden Beschreibung eines in der Zeichnung dargestellten bevorzugten Ausführungsbeispiels.

Es zeigen:

Fig. 1 einen Ausschnitt einer in einem Magnetjoch einer Wirbelstromprüfanlage angeordneten Meßeinrichtung und

Fig. 2 einen Schnitt entlang der Linie A-B in Fig. 1.

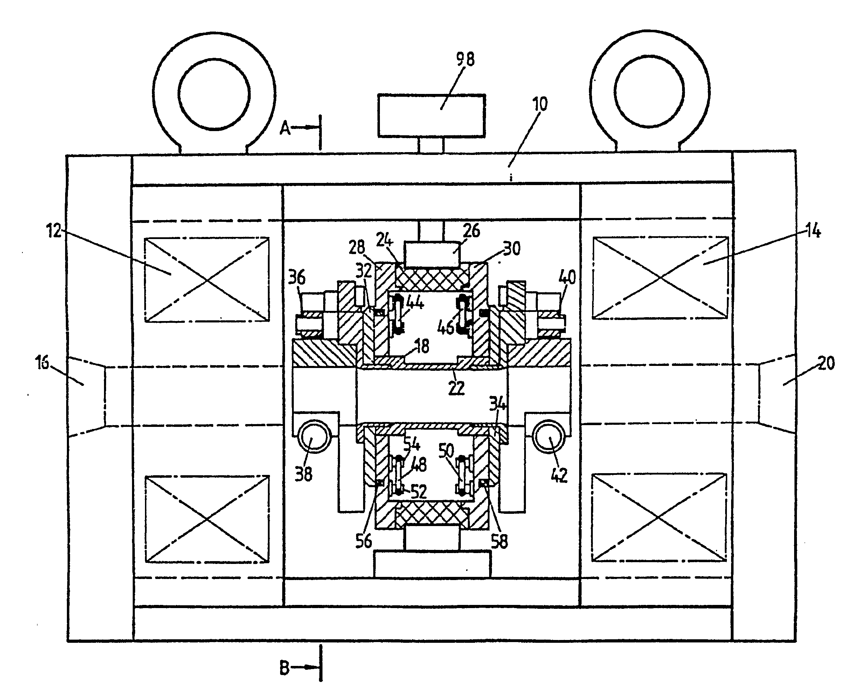

In Fig. 1 ist in Seiten- und Schnittdarstellung ein Magnetjoch (10) mit Elektrospulen (12) und (14) dargestellt, das zur zerstörungsfreien Prüfung von zylindrischen Werkstücken mittels Wirbelstrom bestimmt ist. Dabei weist das Magnetjoch (10) konzentrisch zu den Wicklungen (12) und (14) eine durchgehende Bohrung (16) auf, durch die das nicht dargestellte zylindrische Werkstück durch dem Magnetjoch (10) hindurch an einer vorzugsweise mehrere Meßspulen umfassenden Meßeinrichtung (18) vorbeigeführt wird, die konzentrisch zu der mit dem Bezugszeichen (20) versehenen Längsachse des Werkstückes, die mit der des Magentjoches zusammenfällt, angeordnet ist. Die Meßspulen (18) können dabei von einem Spulenkörper (22) aufgenommen sein.

Um sicherzustellen, daß die Meßeinrichtung (18) stets zentrisch zu dem zu überprüfenden Werkstück auch dann angeordnet ist, wenn dieses hinsichtlich seines Durchmessers Schwankungen aufweisen sollte, wird jene selbstzentrierend zu dem Werkstück ausgerichtet. Hierzu ist eine ortsfest angeordnete Halterung (24) vorgesehen, die einen Hohlzylinderabschnitt (26), der konzentrisch die Aussparung (16) umgibt, umfaßt, dessen Stirnflächen von plattenförmigen Befestigungselementen oder Aufnahmescheiben (28) und (30) gebildet sind. Radial hierzu verschiebbar sind Flanschscheiben (32) und (34) angeordnet, die zum einen Gleitelemente (36), (38) bzw. (40) und (42) und zum anderen den Spulenkörper (22) und damit die Meßeinrichtung (18) aufnehmen. Damit die Flanschscheiben (28) und (30) und die hiermit eine Einheit bildenden Gleitelemente (36) bis (42) und die Meßeinrichtung (18) schwimmend in Bezug auf die Halterung (24) gelagert sind, gehen von den Aufnahmescheiben elastische Befestigungselemente (44), (46), (48) und (50) aus, die ihrerseits mit der Einheit Gleitelemente-Meßeinrichtung (36 bis 42, 18) über die Flanschscheiben (32) und (34) verbunden sind. Hierzu sind die Rundschnurringe (44) bis (50) über sowohl von den Aufnahmescheiben (20) und (30) als auch von den Flanschscheiben (32) und (34) vorzugsweise in das Innere der Halterung (30) abragende Zapfen gelegt, von denen zwei beispielhaft mit den Bezugszeichen (52) und (54) versehen sind. Durch diese Konstruktion sind erkennbar die Gleitelemente (36) bis (42) sowie die Meßeinrichtung (18) relativ zu der Halterung (24) und radial zu der Bohrung (16) und damit zu einem Werkstück verschiebbar. Um eine reibungsarme Relativbewegung zwischen diesen Elementen zu ermöglichen, sind Gleitringe in Form von Teflonringen ((T)) (56) und (58) in den aneinandergrenzenden Wandungen eingelassen.

Die Selbstzentrierung erfolgt nun dadurch, daß die Gleitelemente (36) bis (42) auf der Oberfläche des durch die Aussparung (16) geführten Werkstückes abgestützt werden, so daß demzufolge ein automatisches Verfolgen von Oberflächenunebenheiten erfolgt, wodurch sichergestellt ist, daß der lichte Abstand zwischen der Meßeinrichtung (18) und dem zu überprüfenden Werkstück über den Querschnitt stets konstant ist.

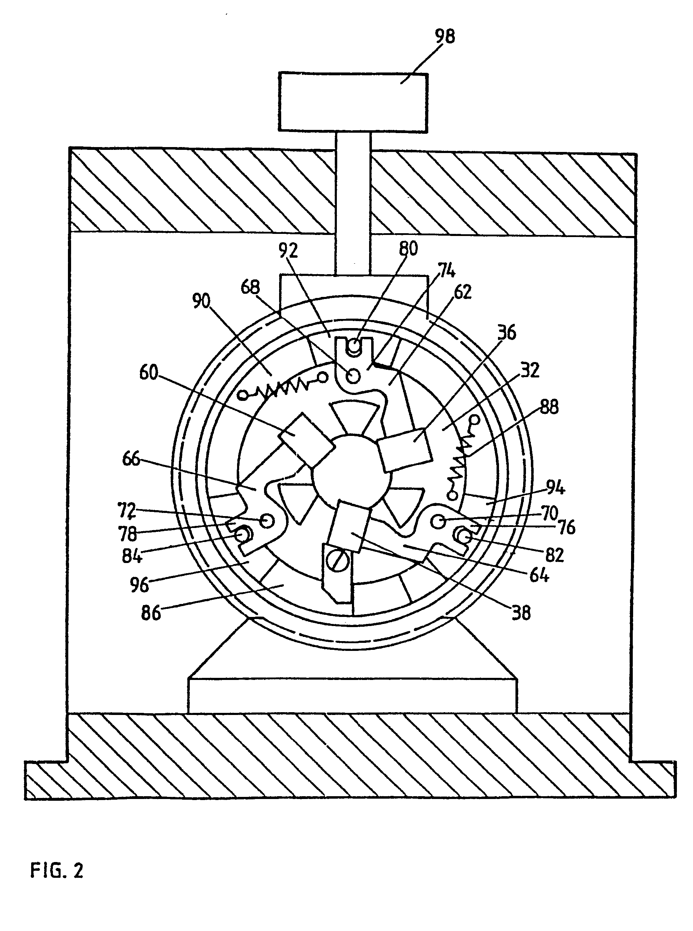

Wie die Fig. 1 verdeutlicht, sind jeweils zu beiden Seiten der Meßeinrichtung (18) Gleitelemente angeordnet. Dabei handelt es sich gemäß Schnittdarstellung nach Fig. 2 vorzugsweise um jeweils drei Gleitrollen (36), (38) und (40), die gleichmäßig auf dem Umfang eines Kreises verteilt angeordnet sind. Die Gleitrollen (36), (38) und (60) stützen sich nun auf der Oberfläche eines nicht dargestellten Werkstückes ab. Dabei sind die Gleitrollen (36), (38) und (60) von Winkelarmen (62), (64) und (66) aufgenommen und um jeweils eine Achse (68), (70) und (72) verschwenkbar. Die Drehpunkte (68), (70) und (72) gehen nun ebenfalls über nicht näher bezeichnete Verbindungsstücke fest von der Flanschscheibe (32) aus, die schwimmend zu der Halterung (24) gelagert ist. Damit die Gleitrollen (36), (38) und (40) bestrebt sind, stets auf der Oberfläche des Werkstückes anzuliegen, sind die den Gleitrollen abgewandten Enden (74), (76) und (78) der Winkelarme (62), (64) und (66) von Vorsprüngen (80), (82) und (84) aufgenommen, die ihrerseits von einem kreisförmigen Verschiebelement (86) ausgehen. Dieses ist zu den Drehachsen (68), (70) und (72) derart verdrehbar, daß auf die Winkelarme (62), (64) und (66) dahingehend eine Kraft aufgezwungen wird, daß die Gleitrollen (36), (38) und (60) bestrebt sind, fest auf der Oberfläche des zu überprüfenden Werkstückes aufzuliegen. Diese Zwangskräfte werden durch elastische Elemente wie Federn (88) und (90) hervorgerufen, die das Verschiebeelement (86) mit der Halterung für die Drehpunkte (68), (70) und (72) verbinden.

Der Anfangshub der Gleitelemente (36), (38) und (60) in Bezug auf das Werkstück kann ferner durch entlang des Verschiebelementes (86) einstellbare segmentartige Justierelemente (92), (94) und (96) eingestellt werden, um so vor einer Messung eine Anpassung auf die Durchmesser der zu überprüfenden Werkstücke vorzunehmen.

Dadurch, daß die auf beiden Seiten der Meßeinrichtung (18) vorgesehenen Gleitelemente (36), (38), (40), (42) und (60) stets auf der Oberfläche des zu überprüfenden Werkstückes aufliegen und dessen Verlauf folgen, ist gewährleistet, daß im gleichen Umfang die Meßeinrichtung (18) mit bewegt wird, so daß letztendlich der Luftspalt zwischen dem Werkstück und der Meßeinrichtung (18), die erwähnterweise vorzugsweise mehrere konzentrisch um die Aussparung (16) angeordnete Meßsonden wie Meßspulen umfaßt, stets gleich groß ist, wodurch die von der Meßeinrichtung (18) gewonnenen Meßwerte eine hohe Reproduzierbarkeit aufweisen.

Die Halterung (24) selbst ist über ein Stellelement (98) in dem Magnetjoch (10) befestigt und kann leicht ausgetauscht werden.

## Patentansprüche

1. Anordnung für die zerstörungsfreie Prüfung von Werkstücken mit einer zumindest eine Meßsonde wie -spule aufweisenden Meßeinrichtung (18), die sich zumindest abschnittsweise entlang der Umfangsfläche erstreckt und die mit zumindest zwei Gleitelementen (36, 38, 40, 42, 60) verbunden ist, die auf dem Werkstück abgestützt sind,
**dadurch gekennzeichnet,**
daß in bezug auf die Längsachse des eine zylinderform aufweisenden Werkstückes jeweils zumindest drei gleichmäßig auf einem Kreisumfang vorgesehene Gleitelemente (36, 38, 60, 40, 42) vor und hinter der Meßeinrichtung (18, 22) angeordnet sind, und daß die Gleitelemente von einer in bezug auf das Werkstück ortsfest angeordneten Halterung (24) ausgehen, die zueinander beabstandete, senkrecht zur Längsachse (20) des Werkstückes verlaufende und dieses umgebende Befestigungselemente (28, 30) aufweist, von denen elastische Elemente (44, 46, 48, 50) ausgehen, wobei die Gleitelemente und die Meßeinrichtung (18) eine Einheit (36, 38, 60, 40, 42, 18, 22) bilden, die schwimmend in der Halterung (24) gelagert ist.

2. Anordnung nach Anspruch 1,
**dadurch gekennzeichnet,**
daß die Halterung (24) einen sich entlang der Längsachse (20) des Werkstückes erstreckenden Hohlzylinderabschnitt (26) umfaßt, dessen Stirnseiten von Aufnahmescheiben (28, 30) gebildet sind, und daß außenliegend und parallel zu den Aufnahmescheiben Flanschscheibenelemente (32, 34) verlaufen, die zum einen direkt oder indirekt die Lagerung (68, 70, 72) für die Gleitelemente (36, 38, 60, 40, 42) bilden und zum anderen Vorsprünge wie Zapfen (52) für die Aufnahme der elastischen Elemente (44, 46, 48, 50) wie Rundschnurringe aufweisen.

3. Anordnung nach Anspruch 2,
**dadurch gekennzeichnet,**
daß zwischen den Flanschscheibenelementen (32, 34) die Meßeinrichtung (18) bzw. eine diese aufnehmende Halterung in Form von z. B. Spulenkörpern (22) ortsfest angeordnet ist.

4. Anordnung nach Anspruch 2,
**dadurch gekennzeichnet,**
daß zwischen den Aufnahmescheiben (28, 30) der Halterung (24) und den Flanschscheibenelementen (32, 34) Gleitringe (56, 58) angeordnet sind.

## Claims

1. An arrangement for non destructive testing of workpieces comprising a measuring device having at least one measuring probe such as a measuring coil, said measuring device extending at least in sections along the peripheral surface and being connected to at least two sliding elements (36, 38, 40, 42, 60) supported on said workpiece,
**characterized in that:**
in respect to the longitudinal axis of the cylindrically shaped workpiece at least three sliding elements (36, 38, 60, 40, 42) are provided on both sides of said measuring device (18, 22), said each at least three sliding elements are regularly spaced on a circular circumference; said sliding elements being supported on a holding device (24) arranged stationary in relation to said workpiece; said holding device comprises fastening elements (28, 30) arranged at a distance from one another, running vertical to the longitudinal axis (20) of said workpiece and surrounding said workpiece; said fastening elements (28, 30) being the starting points of elastic elements (44, 46, 48, 50); and said sliding elements and said measuring device form a unit (36, 38, 60, 40, 18, 22) supported in a floating manner on said holding device (24).

2. An arrangement according to claim 1,
**characterized in that**
said holding device (24) comprises a hollow-cylinder section (26) extending along the longitudinal axis (20) of said workpiece and having faces formed by mounting discs (28, 30); and that flange disc elements (32, 34) are provided external and parallel to said mounting discs; said flange disc elements on the one hand forming directly or indirectly bearings (68, 70, 72) for said sliding elements (36, 38, 60, 40, 42) and on the other hand having projections such as pins (52) for holding said elastic elements (44, 46, 48, 50) such as round-cord sealing rings.

3. An arrangement according to claim 2,
**characterized in that**
said measuring device (18) or a holding device holding it in the form of coil shells (22) or the like is arranged stationary between said flange disc elements (32, 34).

4. An arrangement according to claim 2,
**characterized in that**
sliding rings (56, 58) are arranged between said mounting discs (28, 30) of said holding device (24) and said flange disc elements (32, 34).

## Revendications

1. Dispositif de contrôle non destructif de pièces avec au moins une sonde de mesure et une installation de mesure (18) comprenant une bobine et s'étendant au moins sur une zone, le long de la surface périphérique en étant reliée à au moins deux patins (36, 38, 40, 42, 60) qui s'appuient sur la pièce, dispositif caractérisé

par au moins trois patins (36, 38, 60, 40, 42) répartis régulièrement suivant un cercle et placés devant et derrière l'installation de mesure (18, 22), par rapport à l'axe longitudinal de la pièce présentant une forme de cylindre, les patins étant reliés à un support (24) monté fixe par rapport à la pièce, ce support comprenant des éléments de fixation (28, 30) distants l'un de l'autre, dirigés perpendiculairement à l'axe lon-gitudinal (20) de la pièce et entourant celle-ci, des éléments élastiques (44, 46, 48, 50) partant des éléments de fixation, les patins et l'installation de mesure (18) formant un ensemble (36, 38, 60, 40, 42, 18, 22) monté de façon flottante dans le support (24).

    2. Dispositif selon la revendication 1, caractérisé en ce que

le support (24) comprend un segment de cylindre creux (26) qui s'étend le long de l'axe longitudinal (20) de la pièce, les faces du support étant constituées par des disques de réception (28, 30) et en ce qu'à l'extérieur et parallèlement aux disques de réception, des éléments de disques en forme de brides (32, 34) forment directement ou indirectement le support (68, 70, 72) des éléments de glissement (36, 38, 60, 40, 42) et possèdent des parties en saillie telles que des tétons (52) pour recevoir des éléments élastiques (44, 46, 48, 50) et des cordons circulaires.

    3. Dispositif selon la revendication 2, caractérisé en ce que

l'installation de mesure (18) ou le support qui la reçoit sous la forme par exemple de corps de bobine (22) est fixé entre les deux éléments de disques en forme de brides (32, 34).

    4. Dispositif selon la revendication 2, caractérisé par des anneaux de glissement (56, 58) entre les disques de réception (28, 30) du support (24) et les éléments de disques en forme de brides (32, 34).

FIG. 2